# EUROPEAN PATENT APPLICATION

(11) **EP 1 657 796 A1**
(43) Date of publication of application: **17.05.2006**
(21) Application number: 05024834.3
(22) Date of filing: 14.11.2005
(51) Int. Cl.: H02H 5/04, H02J 3/14

(54) **Method and system for thermal management**

(30) Priority: 16.11.2004 US 627895 P; 10.11.2005 US 272390
(71) Applicant: Astronics Advanced Electronic Systems Corp., Redmond, WA 98052-2540 (US)
(72) Inventor: Lamb, John S., Bothell, Snohomish, WA (US); Hsieh James, Bellevue, King, WA (US); Jouper, Jeffrey A., Renton, King, WA (US)
(74) Representative: Klunker . Schmitt-Nilson . Hirsch

(57) **Abstract**

In a method of thermal management, a temperature is sensed and compared with a first preset temperature. The lowest priority load is disabled in response to the temperature being equal to the first preset temperature.

## Description

### CROSS REFERENCE TO RELATED APPLICATION(S)

This application claims the benefit of U.S. Provisional Application No. 60/627,895, filed on November 16, 2004, entitled "Method and System for Thermal Management" the entirety of which is incorporated by reference herein.

### BACKGROUND OF THE INVENTION

### Field of the Invention

This invention relates generally to electrical systems. More particularly, the invention relates to thermal management in electrical systems.

### Description of the Related Art

Electrical power supply and distribution equipment must operate without overheating. Overheating can damage the equipment or present a safety hazard to personnel. The amount of heat generated in electrical power distribution equipment is generally related to the amount of electrical load (current) passing through the equipment. Some means of limiting the maximum temperature is generally required.

Conventional solutions that control the temperature of the equipment limit the performance of the equipment by disabling all the loads together and re-enabling all loads together. This solution has drawbacks and disadvantages. For example, re-enabling all loads together has the undesirable effects on the power source by inducing disruptive power spikes. Moreover, this solution reduces the availability of power to all the connected loads and large temperature changes in the equipment may stress the equipment.

Another conventional solution is to include an active cooling method such as a fan or other cooling method that is controlled based on temperature or load level. However, active cooling devices add complexities that reduce the reliability of the overall system. Accordingly, conventional systems lack the capability cool equipment without complex add-ons.

U.S. Patent No. 4,135,101 to Young, et al. ("Young") describe yet another conventional solution. Young describes a power management system where a power monitor measures the ambient temperature and the power load on an associated distribution transformer. The power monitor initiates a peak load function whenever the product of the temperature factor and the measured load rises above a preset control point. The peak load function disables a single group of transformers and at various cycle times attempts to cycle on the group of transformers based on the current demand. Accordingly, Young generally describes a system configured to disable and enable loads in response to load conditions.

Another system known in the art and described in U.S. Patent Application Publication No. 2004/0027003, is a multi-output circuit device with preset power supply priority that provides higher safety. The load of inferior priority depending on the preset overload breaking sequence is cut off first when the total load amperage exceeds the rated amperage while maintaining power supply to the load of superior priority under the operation status of variable local loads.

What is needed in the art is a system that can protect distribution equipment from overheating and can be used with dynamic priorities. The present invention is believed to be an answer to this need.

### BRIEF SUMMARY OF THE INVENTION

One embodiment pertains to a method of thermal management. The method includes sensing a temperature and comparing the temperature with a first preset temperature. The method also includes disabling a lowest priority load in response to the temperature being equal to the first preset temperature.

Another embodiment relates to a system for thermal management. The system includes a power supply, a plurality of loads, each load connected to the power supply through an associated switch, at least one temperature sensor, and a controller configured to interface with the plurality of associated switches. The controller is configured to enable and disable the plurality of loads based on a predetermined priority.

### BRIEF DESCRIPTION OF THE DRAWINGS

Various features of the embodiments can be more fully appreciated as the same become better understood with reference to the following detailed description of the embodiments when considered in connection with the accompanying figures, in which:

FIG. 1 illustrates an exemplary system where an embodiment may be practiced; and.

FIG. 2 illustrates an exemplary flow diagram according to another embodiment.

### DETAILED DESCRIPTION

For simplicity and illustrative purposes, the principles of the present invention are described by referring mainly to exemplary embodiments thereof. However, one of ordinary skill in the art would readily recognize that the same principles are equally applicable to, and can be implemented in, all types of electrical network systems, and that any such variations do not depart from the true spirit and scope of the present invention. Moreover, in the following detailed description, references are made to the accompanying figures, which illustrate specific embodiments. Electrical, mechanical, logical and structural changes may be made to the embodiments without departing from the spirit and scope of the present invention. The following detailed description is, therefore, not to be taken in a limiting sense and the scope of the present invention is defined by the appended claims and their equivalents.

Embodiments generally relate to thermal management of electrical loads in system that includes power supplies and loads connected thereto. More particularly, a thermal management system (TMS) may be configured to control the temperature of electrical power supply or distribution equipment by controlling the availability of electrical power to the connected loads. The TMS allows a power source of a system to operate at its maximum output level without exceeding environmental limits. For example, in one embodiment, when the temperature of the system rises to a preset temperature, a load is disabled until the equipment temperature falls below a second preset temperature at which time the disconnected load is enabled.

In other embodiments of the TMS, a system may have multiple loads connected to a power supply. The loads may be assigned a priority based on predetermined criteria. The criteria, for example, may be based on order of connection, the physical connectors to which the loads are connected, level of electrical load or other similar criteria. When the TMS senses the temperature reaching a first preset temperature, the TMS may disable the lowest priority load. After a certain preset time, the TMS may determine that the temperature has not dropped below a second preset temperature, the TMS may disable the second lowest priority load. The TMS may then continue to disable loads until the temperature of the system is below the second preset temperature. When the TMS senses the temperature falls below the second preset temperature, the TMS may be configured to adaptively enable the disabled loads. For example, in one embodiment, the loads may be enabled based on descending order of priority.

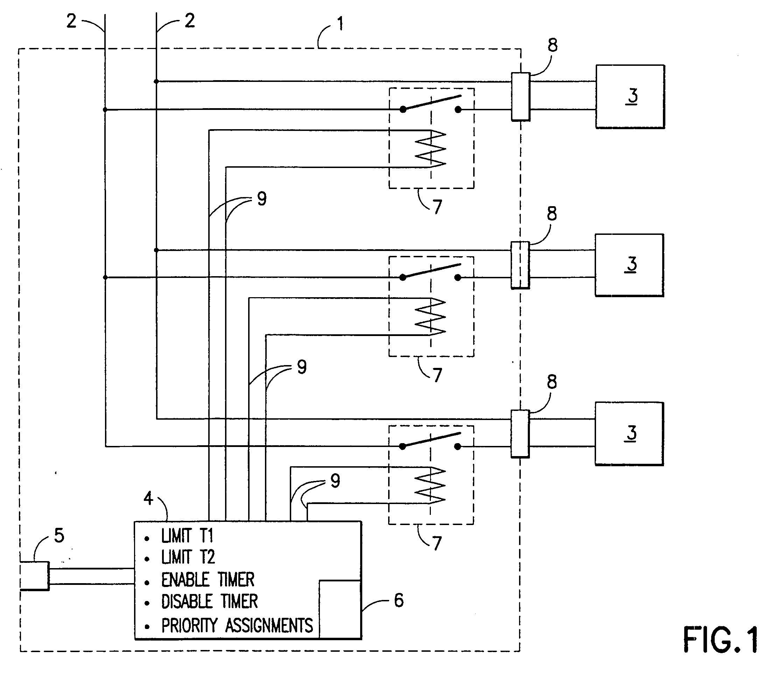

FIG. 1 illustrates an exemplary system 100 in accordance with an embodiment of the present invention. It should be readily apparent to those of ordinary skill in the art that the system 100 depicted in FIG. 1 represents a generalized schematic illustration and that other components may be added or existing components may be removed or modified.

As shown in FIG. 1, system 100 includes an enclosure 1, a power source 2, a plurality of electrical loads 3, a monitor and control circuit 4, a temperature sensor 5, an integral timer 6, switches 7, connections 8, and switch control signals 9.

The enclosure 1 may be a structure to house and protect the monitor and control circuit 4, the temperature sensor 5, the integral timer 6, switches 7, the connections 8, and switch control signals 9.

The electrical loads 3 can be connected to the enclosure 1 through the respective connections 8 that provide an interface between the electrical loads 3 and the enclosure 1. The power source 2 can then be connected to the connections 8 through switches 7.

The switches 7 can be interfaced with the monitor and control circuit 4 through the switch control signals lines 9. The monitor and control circuit 4 can be configured to send "on" or "off" signals to each individual switch 7. By sending an "off" signal, the monitor and control circuit can disable the appropriate switch, and thereby prevent the flow of power to the associated electrical load 3. Conversely, the monitor and control circuit 4 can enable an appropriate switch and allow power to flow to the associated electrical load.

The monitor and control circuit 4 can also be interfaced with the temperature sensor 5. The temperature sensor 5 is secured with the enclosure 1 to prevent movement thereof. In some embodiments, multiple temperature sensors 5 can be interfaced with the monitor and control circuit 4. In other embodiments, the temperature sensor can be attached to the electrical loads 3 or substantially near the electrical loads. The temperature sensor 5 may be implemented using commercially available parts as thermistors, thermocouples, thermometers or other similar temperature sensing devices.

The monitor and control circuit 4 can be implemented with microprocessor, digital signal processor, an application specific integrated circuit, or other similar processing device. The monitor and control circuit 4 can include persistent, non-persistent memory, or a combination thereof to store and execute a program that implements the functionality of the TMS.

Prior to the operation of the system 100 with a plurality of electrical loads 3, the monitor and control circuit 4 can be configured to assigned a priority level to each of the electrical loads. In some embodiments, the priority level can be the order of connection to the enclosure, the physical connector 8 to which an associated electrical load 3 is connected thereto, the amount of electrical load, random assignment, or other user-determined criterion. In other embodiments, the priority level for each electrical load may be assigned based on a combination of the enumerated factors.

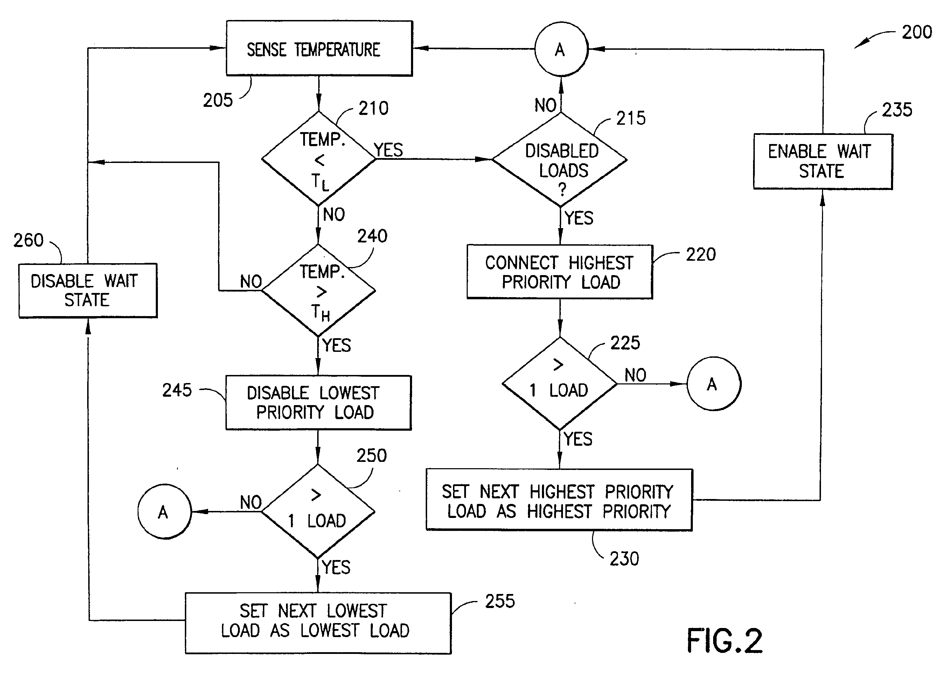

FIG. 2 illustrates an exemplary flow diagram 200 in accordance with another embodiment. It should be readily apparent to those of ordinary skill in the art that this flow diagram 200 represents a generalized illustration and that other steps may be added or existing steps may be removed or modified.

As shown in FIG. 2, in step 205, the monitor and control circuit 4 can be configured to sense the temperature from the temperature sensor 5. The monitor and control circuit 4 can then be configured to compare the sensed temperature with a preset or predetermined temperature, T_{L}, in step 210.

If the monitor and control circuit 4 determines that the sensed temperature is less than or equal to preset temperature T_{L}, monitor and control circuit 4 may check if the monitor and control circuit 4 had previously disabled any of the connected electrical loads, in step 215. As explained below, the monitor and control circuit 4 can be configured to set a flag to indicate that any of the electrical loads 3 had been disabled.

If the monitor and control circuit 4 determines that all electrical loads 3 are enabled, the monitor and control circuit 4 proceed to the processing of step 205. Otherwise, if the monitor and control circuit 4 determines that an electrical load had been disabled, the monitor and control circuit 4 may be configured to connect the highest priority load by activating the switch 7 of the highest priority electrical load 3 through the switch control signal 9, in step 220.

In step 225, the monitor and control circuit 4 can be configured to determine whether more than one electrical load were previously disabled. If only one electrical load was previously disabled, the monitor and control circuit 4 can be configured to proceed to the processing of step 205. Otherwise, the monitor and control circuit 4 can designate the next highest priority electrical load 3 as the highest priority electrical load, in step 230. In some embodiments, the monitor and control circuit 4 can monitor the priority of disabled electrical loads 2 through a push-pop stack queue. In other words, a stack queue may be instantiated where as an electrical load 3 is disabled, an identifier for the disabled electrical load is pushed onto the stack queue. The identifier can be the interface 8, a predetermined name or other similar naming convention. When the disabled electrical loads are re-enabled, the monitor and control circuit 4 can "pop" the identity of the highest priority load from the stack queue.

Subsequently, the monitor and control circuit 4 can be configured to enter a wait state, in step 235. The wait state can be user defined and may be implemented the integral timer 6. Subsequently, after the completion of the wait state, the monitor and control circuit 4 returns to step 205.

Returning to step 210, if the monitor and control circuit 4 determines that the sensed temperature is greater than preset temperature, T_{L}, the monitor and control circuit 4 can be configured to compare the sensed temperature with the preset temperature, T_{H}, in step 240.

If the monitor and control circuit 4 determines that the sensed temperature is less than the preset temperature, T_{H}, the monitor and control circuit 4 can be configured return to the processing of step 205. Otherwise, if the monitor and control circuit 4 determines that sensed temperature is equal to or greater than the preset temperature, T_{H}, the monitor and control circuit 4 can be configured to disable the lowest priority electrical load 3 by sending an "off" control signal over the appropriate switch control signal line 9 of the associated switch 7 of the lowest priority electrical load, in step 245. In some embodiments, the identity of the disabled electrical load may be pushed onto a stack queue, as described above.

In step 250, the monitor and control circuit 4 can be configured to determine whether there are multiple electrical loads 3 connected to the enclosure 1. If the monitor and control circuit 4 determines that a single electrical load is connected to the power source 2, the monitor and control circuit 4 can return to the processing of step 205. Otherwise, if the monitor and control circuit 4 determines that multiple electrical loads 3 are connected to the power source 2, the monitor and control circuit 4 can be configured to designate the next lowest priority electrical load as the lowest priority electrical load, in step 255. The monitor and control circuit 4 can be configured to then enter a disable wait state, in step 260. The disable wait state may be implemented by the integrated timer 6 and may be user set. After the expiration of the disabled wait state, the monitor and control circuit 4 may return to the processing of step 205.

A specific example of an embodiment of this invention has been implemented in the Astronics 1191-1 In Seat Power Supply. In this example, priority is assigned on the order of the electrical loads requesting power. Preset temperature, T_{H}, is the temperature whereby power is removed to the electrical load that requested power most recently. Simultaneously, a Disable timer starts if the number of electrical loads requesting power is greater than two. If the temperature of the In Seat Power Supply does not fall to preset temperature, T_{L}, by the time the disable timer expires, then the power to the next to the last user is turned off as well.

When the temperature falls to preset temperature, T_{L}, the In Seat Power Supply begins providing power to the electrical loads that are still requesting power in order of their request. The In Seat Power Supply begins providing power to the electrical loads an interval defined the Enable timer, which in this example is ten seconds. The In Seat Power Supply maintains the priority of the electrical loads in the event that any load is disconnected or no longer a valid load. In such a case, these loads would lose their priority.

While the invention has been described with reference to the exemplary embodiments thereof, those skilled in the art will be able to make various modifications to the described embodiments without departing from the true spirit and scope. The terms and descriptions used herein are set forth by way of illustration only and are not meant as limitations. In particular, although the method has been described by examples, the steps of the method may be performed in a different order than illustrated or simultaneously. Those skilled in the art will recognize that these and other variations are possible within the spirit and scope as defined in the following claims and their equivalents.

## Claims

1. A method of thermal management, comprising:
sensing a temperature;
comparing the temperature with a first preset temperature; and
disabling a lowest priority load in response to the temperature being equal to the first preset temperature.

2. The method according to claim 1, further comprising:
designating a second lowest priority load as the lowest priority load.

3. The method according to claim 2, further comprising:
sensing a second temperature;
comparing the second temperature with the first preset temperature; and
disabling the lowest priority load in response to the second temperature being equal or greater than the first preset temperature.

4. The method according to claim 1, further comprising:
comparing the temperature with a second preset temperature; and
enabling a highest priority load in response to the temperature being equal to or less than the second preset temperature.

5. The method according to claim 4, further comprising:
designating the previously second highest priority load as the highest priority load.

6. The method according to claim 4, further comprising:
sensing a second temperature;
comparing the second temperature with the second preset temperature; and
enabling the highest priority load in response to the second temperature being equal or less than the second preset temperature.

7. A system for thermal management, comprising:
a power supply;
a plurality of loads, each load connected to the power supply through an associated switch;
at least one temperature sensor; and
a controller configured to interface with the plurality of associated switches and at least one temperature sensor, wherein said controller is configured to enable and disable the plurality of loads based on a predetermined priority in response to data from the at least one temperature sensor.

8. The system according to claim 7, wherein the controller is configured to determine a temperature from the at least one temperature sensor and compare the temperature with a first preset temperature.

9. The system according to claim 8, wherein the controller is configured to disable the associated switch of a lowest priority load from the plurality of loads.

10. The system according to claim 9, wherein the controller is configured to determine a second temperature from the at least one temperature sensor and compare the second temperature with the first preset temperature.

11. The system according to claim 10, wherein the controller is configured to disable an associated switch of a second lowest priority load of the plurality of loads.

12. The system according to claim 7, wherein the controller is configured to determine a temperature from the at least one temperature sensor and compare the temperature with a second preset temperature.

13. The system according to claim 12, wherein the controller is configured to enable an associated switch of the highest priority load of the plurality of loads.

14. The system according to claim 13, wherein the controller is configured to sense a second temperature from the at least one temperature sensor and compare the second temperature with the second preset temperature.

15. The system according to claim 14, wherein the controller is configured to enable an associated switch with second highest priority load of the plurality of loads.
